# EUROPÄISCHE PATENTSCHRIFT

(11) **EP 0 380 791 B1**
(45) Veröffentlichungstag und Bekanntmachung des Hinweises auf die Patenterteilung: **04.08.1993**
(21) Anmeldenummer: 89122876.9
(22) Anmeldetag: 12.12.1989
(51) Int. Cl.: G01D 15/24, G01D 15/28, B65H 9/08, B65H 5/22

(54) **Automatisch gesteuerte Vorrichtung für die abschnittsweise Behandlung einer Bahn aus Flachmaterial**
Automatically controlled device for treating portions of web material
Dispositif à gestion automatique de parties de matériaux continus

(30) Priorität: 24.12.1988 DE 3843868
(43) Veröffentlichungstag der Anmeldung: 08.08.1990
(73) Patentinhaber: Aristo Graphic Systeme GmbH & Co KG, D-22525 Hamburg (DE)
(72) Erfinder: Schütt, Eduard Claus, D-2000 Hamburg 73 (DE); Rubow, Gerhard, Dr., D-2000 Hamburg 65 (DE)

(56) Entgegenhaltungen:
- GB-A- 2 147 884
- GB-A- 2 177 067
- US-A- 4 483 472
- US-A- 4 568 075

## Beschreibung

Die Erfindung bezieht sich auf eine automatisch gesteuerte Vorrichtung für die abschnittsweise Behandlung einer Bahn aus Flachmaterial, das auf der Auflagefläche eines Arbeitstisches ausgebreitet wird, die kürzer ist als die Bahn, mit einem in Richtung der Längserstreckung der Bahn über die Auflagefläche des Arbeitstisches gesteuert hin- und herbewegbaren Schlitten, an dem ein quer zur Längserstreckung der Bahn gesteuert hin- und herbewegbarer Kopf zur Aufnahme eines Werkzeugs angeordnet ist, sowie mit einer Einrichtung zur abschnittsweisen Verlagerung des Flachmaterials von einem Vorratsbereich nach vorn in Richtung der Längserstreckung der Bahn.

Bei einer bekannten Vorrichtung dieser Art (DE-A- 24 05 133), mit der mittels eines Zeichenwerkzeuges auf dem Flachmaterial gezeichnet oder mittels eines Schneidwerkzeuges Einschnitte im Flachmaterial hergestellt werden können, besteht die Einrichtung zur schrittweisen Verlagerung des Flachmaterials aus Klemmelementen, die am Schlitten befestigt sind und die mit dem Randbereich der Bahn aus Flachmaterial in klemmenden Eingriff gebracht werden können, um auf diese Weise das Flachmaterial durch gesteuerte Bewegung des Schlittens eine genau definierte Strecke zu verlagern, so daß das Flachmaterial nach Freigabe derart auf der Auflagefläche des Arbeitstisches liegt, daß sich die zunächst am hinteren Ende des Arbeitstisches befindlichen Aufzeichnungen oder Einschnitte nunmehr an einer genau bestimmten Stelle am vorderen Ende der Auflagefläche befinden. Auf diese Weise kann das Werkzeug dann die Behandlung des Flachmaterials so fortsetzen, daß die neuen Aufzeichnungen oder Einschnitte genau an die zuvor hergestellten Aufzeichnungen oder Einschnitte anschließen.

Bei der bekannten Vorrichtung ist somit der den Kopf zur Aufnahme des Werkzeugs tragende Schlitten zusätzlich mit den Klemmelementen ausgestattet, wodurch sein Aufbau verhältnismäßig kompliziert und sein Gewicht hoch wird. Daher ist die Herstellung teuer, und an die Antriebs- und Steuereinrichtungen für den Schlitten werden hohe Anforderungen gestellt.

Es ist Aufgabe der Erfindung, eine Vorrichtung zur Behandlung einer Bahn aus Flachmaterial einfacher auszubilden.

Zur Lösung dieser Aufgabe wird eine Vorrichtung der eingangs erwähnten Art erfindungsgemäß derart ausgestaltet, daß der Arbeitstisch in Richtung der Längserstreckung der Bahn zwischen einer Arbeitsstellung zur Behandlung des Flachmaterials und einer in Verlagerungsrichtung versetzten Vorschubstellung hin- und herbewegbar ist, wobei die Länge der Auflagefläche des Arbeitstisches größer ist als die Länge der Bewegungsbahn des Arbeitstisches zwischen Arbeitsstellung und Vorschubstellung, daß das Flachmaterial zumindest während der Bewegung des Arbeitstisches von der Arbeitsstellung in die Vorschubstellung eine Relativbewegung zwischen ihnen auschließend mit dem Arbeitstisch verbunden ist und daß im dem der vorderen Kante des in der Vorschubstellung befindlichen Arbeitstisch benachbarten Bereich des den Arbeitstisch tragenden Rahmens eine Bahnhalteeinrichtung vorgesehen ist, die das Flachmaterial während der Bewegung des Arbeitstisches von der Vorschubstellung in die Arbeitsstellung unverlagerbar bezüglich dem Rahmen hält.

Bei der erfindungsgemäßen Vorrichtung erfolgt somit die abschnittsweise Verlagerung der Bahn aus Flachmaterial in gesteuerter und definierter Weise dadurch, daß die Bahn nach Behandlung eines auf der Auflagefläche des Arbeitstisches befindlichen Abschnittes zusammen mit dem Arbeitstisch in die Vorschubstellung bewegt wird, in der dann die Bahn mittels der Bahnhalteeinrichtung unverlagerbar positioniert wird, während der Arbeitstisch ohne Bahnverlagerung in die Arbeitsstellung zurückbewegt wird. Auf diese Weise hat eine genau definierte Verlagerungsbewegung des Flachmaterials stattgefunden, so daß sich die zuvor hergestellten, im hinteren Bereich der Auflagefläche des Arbeitstisches befindenden Aufzeichnungen oder Einschnitte nunmehr an einer bekannten Stelle im vorderen Bereich der Auflagefläche befinden und die Behandlung mittels des Werkzeuges unter genauem Anschluß an die zuvor hergestellten Aufzeichnungen oder Einschnitte fortgesetzt werden kann.

Die Bahnhalteeinrichtung kann einen gegen eine Auflagefläche des Rahmens drückbaren Klemmbalken aufweisen, der in der angedrückten Stellung die Bahn aus Flachmaterial unverlagerbar bezüglich dem Rahmen hält, während in der angehobenen Stellung eine Verlagerung des Flachmaterials möglich ist, also die Bewegung des Arbeitstisches von der Arbeitsstellung in die Vorschubstellung und damit die entsprechende Verlagerung der Bahn erfolgen kann.

Um eine genau definierte Positionierung des Flachmaterials im Bereich des Klemmbalkens zu erreichen, kann der Arbeitstisch am vorderen Ende sich nach vorn erstreckende, die Auflagefläche verlängernde Auflagevorsprünge aufweisen, die sich in der Vorschubstellung in in der Anlagefläche vorgesehene Aussparungen erstrecken. Dadurch reicht die Unterstützung des Flachmaterials durch den Arbeitstisch in der Vorschubstellung bis in den Bereich der Auflagefläche, so daß beim Andrücken des Klemmbalkens an die Anlagefläche sonst mögliche Verlagerungen des Flachmaterials vermieden werden.

Um die gemeinsame Bewegung von Arbeitstisch und Flachmaterial zu erreichen, kann der Arbeitstisch mit einer Bahnansaugeinrichtung versehen sein, die zumindest unmittelbar vor Beginn und während der Bewegung des Arbeitstisches von der Arbeitsstellung in die Vorschubstellung aktiviert ist und die während der Bewegung von der Vorschubstellung in die Arbeitsstellung unwirksam ist.

Mit einer derartigen Bahnansaugeinrichtung läßt sich auf einfache Weise eine flächige Halterung des Flachmaterials auf der Auflagefläche des Arbeitstisches erreichen, so daß bei der Bewegung des Arbeitstisches von der Arbeitsstellung in die Vorschubstellung keine Relativbewegung zwischen Arbeitstisch und Flachmaterial eintreten kann.

Die Erfindung wird im folgenden anhand der schematisch und vereinfacht ein Ausführungsbeispiel zeigenden Figuren näher erläutert.

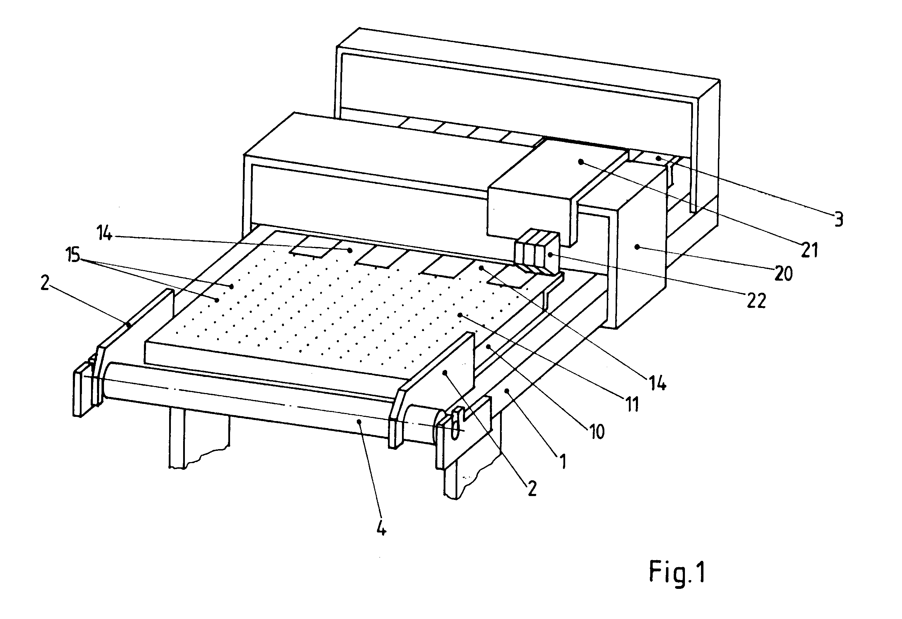

- Figur 1: zeigt in einer perspektivischen Teildarstellung eine Vorrichtung mit in der Arbeitsstellung befindlichem Arbeitstisch ohne aufgebrachtes Flachmaterial.
- Figur 2: zeigt in einer Seitenansicht die Vorrichtung aus Figur 1 mit in der Arbeitsstellung befindlichem Arbeitstisch, wobei die Vorschubstellung des Arbeitstisches gestrichelt angedeutet ist.
- Figur 3: zeigt eine Draufsicht auf die Vorrichtung aus Figur 2.

Die dargestellte Vorrichtung hat einen Rahmen 1, auf dem an einem Ende eine leerlaufende Führrolle 4 angeordnet ist, bezüglich der seitlich und sich mit ihren Längserstreckungen senkrecht zur Mittelachse der Führrolle 4 verlaufende Führplatten 2 angebracht sind. Auf dem Rahmen 1 ist ein Arbeitstisch 10 angeordnet, der eine Auflagefläche 11 aufweist, in der Ansaugöffnungen 15 ausgebildet sind, die in nicht dargestellter Weise mit einer einen Unterdruck erzeugenden Pumpe verbunden sind. Am der Führrolle 4 abgewandten Ende des Arbeitstisches 10 ist dieser Auflagevorsprünge 14 bildend ausgeklinkt, und die Funktion der Auflagevorsprünge 14 wird später beschrieben werden.

Am Rahmen 1 ist ein Schlitten 20 gehaltert, der sich quer über den Arbeitstisch 10 erstreckt und in Richtung senkrecht zur Längsachse der Führrolle 4 gesteuert über die Auflagefläche 11 des Arbeitstisches 10 hin- und herbewegt werden kann, wie dies an sich bekannt und beispielsweise für sogenannte Flach-Plotter üblich ist.

Am Schlitten 20 ist ein Kopf 21 parallel zur Längsachse der Führrolle 4 gesteuert hin- und herbewegbar, der eine Aufnahme 22 für ein Werkzeug, etwa ein Schneidwerkzeug oder einen Plotter-Kegel trägt.

Am der Führrolle 4 gegenüberliegenden Ende des Rahmens 1 befindet sich ein Balken 3, der in seiner oberen Fläche in angedeuteter Weise Aussparungen 5 aufweist, deren Abmessungen den Abmessungen der Auflagevorsprünge 14 des Arbeitstisches 10 entsprechen. Oberhalb des Balkens 3 befindet sich ein in der Senkrechten hin- und herbewegbarer Klemmbalken 30, der zur klemmenden Auflage auf die obere Fläche des Balkens 3 abgesenkt werden kann.

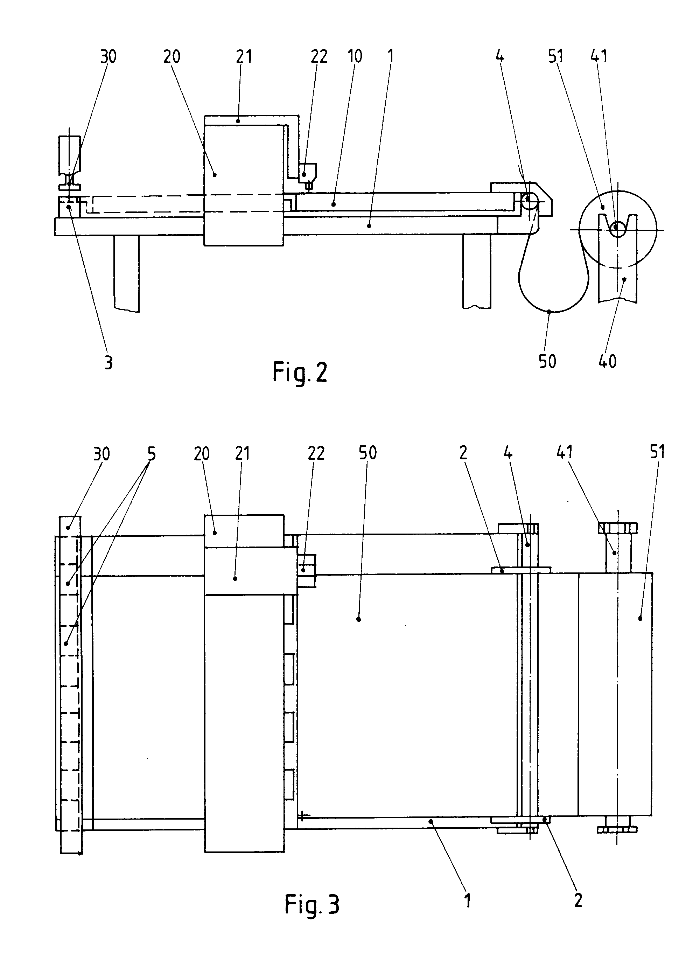

Zur Bearbeitung einer Bahn 50 aus Flachmaterial wird eine auf einer Trägerrolle 41 aufgewickelte Vorratsrolle 51 mit Flachmaterial in Aufnahmen 40 benachbart zur Führrolle 4 gehaltert (Figur 2), und die Bahn 50 wird über die Führrolle 4 und seitlich geführt von den Führplatten 2 mit einem Abschnitt auf die Auflagefläche 11 des Arbeitstisches 10 gebracht. Gegebenenfalls wird sie durch Anlegen eines Unterdrucks an die Ansaugöffnungen 15 fest gegen die Auflagefläche 11 gezogen. In diesem Zustand kann durch gesteuerte Hin- und Herbewegungen des Schlittens 20 und des Kopfes 21 der gewünschte Bahnverlauf auf den auf der Auflagefläche 11 des Arbeitstisches 10 befindlichen Abschnitt der Bahn 50 aufgezeichnet bzw. in die Bahn eingeschnitten werden.

Ist die Bearbeitung des auf der Auflagefläche 11 des Arbeitstisches 10 befindlichen Abschnittes der Bahn 50 beendet, so wird, falls nicht schon Unterdruck an den Ansaugöffnungen 15 anliegt, ein entsprechender Unterdruck erzeugt und dann der Tisch 10 aus der dargestellten Lage in den Figuren 2 und 3 nach links in Richtung auf den Balken 3 verfahren, bis er in die Figur 2 gestrichelt gezeigte Vorschubstellung gelangt, in der seine Auflagevorsprünge 14 sich in die Aussparungen 5 des Balkens 3 erstrecken. Bei dieser Verlagerungsbewegung des Arbeitstisches 10 wird der auf der Auflagefläche 11 befindliche Abschnitt der Bahn 50 in fester, unverlagerbarer Verbindung mit dem Arbeitstisch 10 gehalten.

Ist die Vorschubstellung erreicht, wird der Klemmbalken 30 abgesenkt und in Eingriff mit dem unter ihm befindlichen Bereich der Bahn 50 gebracht, so daß dieser gegen die obere Fläche des Balkens 3 gepreßt und in dieser Lage festgehalten wird. Nunmehr wird der an den Ansaugöffnungen 15 anliegende Unterdruck weggeschaltet, und der Arbeitstisch 10 wird zurück in die in den Figuren gezeigte Arbeitsstellung verfahren, während die Bahn 50 keine Verlagerung bezüglich dem Rahmen 1 erfährt. In der Arbeitsstellung des Arbeitstisches 10 kann dann wieder Unterdruck an die Ansaugöffnungen 15 gelegt und der nunmehr zu bearbeitende, sich auf der Auflagefläche 11 des Arbeitstisches 10 befindliche Abschnitt der Bahn 50 bearbeitet werden.

Da die Vorschubbewegung des Arbeitstisches 10 von der Arbeitsstellung in die Vorschubstellung kürzer ist als die Länge der Auflagefläche 11 des Arbeitstisches 10 in Richtung dieser Vorschubbewegung, liegt am in den Figuren 2 und 3 linken Ende der Auflagefläche nunmehr derjenige Bereich der Bahn 50 auf, der beim vorhergehenden Bearbeitungsschritt im in den Figuren 2 und 3 rechten Bereich der Arbeitsfläche 11 lag, und mit Hilfe des Werkzeugs ist es möglich, die Behandlung der Bahn so fortzusetzen, daß die weiteren Aufzeichnungen oder Einschnitte genau an die Aufzeichnungen oder Einschnitte anschließen, die aus dem vorhergehenden Bearbeitungsvorgang stammen und die sich nunmehr im Bereich des linken Endes der Auflagefläche 11 des Arbeitstisches 10 befinden.

## Patentansprüche

1. Automatisch gesteuerte Vorrichtung für die abschnittsweise Behandlung einer Bahn (50) aus Flachmaterial, das auf der Auflagefläche (11) eines Arbeitstisches (10) ausgebreitet wird, die kürzer ist als die Bahn (50), mit einem in Richtung der Längserstreckung der Bahn (50) über die Auflagefläche (11) des Arbeitstisches (10) gesteuert hin- und herbewegbaren Schlitten (20), an dem ein quer zur Längserstreckung der Bahn (50) gesteuert hin- und herbewegbarer Kopf (21, 22) zur Aufnahme eines Werkzeugs angeordnet ist, sowie mit einer Einrichtung zur abschnittsweisen Verlagerung des Flachmaterials von einem Vorratsbereich nach vorn in Richtung der Längserstreckung der Bahn (50), **dadurch gekennzeichnet,** daß der Arbeitstisch (10) in Richtung der Längserstreckung der Bahn (50) zwischen einer Arbeitsstellung zur Behandlung des Flachmaterials und einer in Verlagerungsrichtung versetzten Vorschubstellung hin- und herbewegbar ist, wobei die Länge der Auflagefläche (11) des Arbeitstisches (10) größer als die Länge der Bewegungsbahn des Arbeditstisches (10) zwischen Arbeitsstellung und Vorschubstellung ist, daß das Flachmaterial zumindest während der Bewegung des Arbeitstisches (10) von der Arbeitsstellung in die Vorschubstellung eine Relativbewegung zwischen Flachmaterial und Arbeitstisch ausschließend mit dem Arbeitstisch (10) verbunden ist, und daß im dem der vorderen Kante des in der Vorbschubstellung befindlichen Arbeitstisches (10) benachbarten Bereich des den Arbeitstisch (10) tragenden Rahmens (1) eine Bahnhalteeinrichtung (3, 30) vorgesehen ist, die das Flachmaterial während der Bewegung des Arbeitstisches (10) von der Vorschubstellung in die Arbeitsstellung unverlagerbar bezüglich dem Rahmen (1) hält.

2. Vorrichtung nach Anspruch 1, **dadurch gekennzeichnet,** daß die Bahnhalteeinrichtung (3, 30) einen gegen eine Anlagefläche des Rahmens (1) drückbaren Klemmbalken (30) aufweist.

3. Vorrichtung nach Anspruch 2, **dadurch gekennzeichnet,** daß der Arbeitstisch (10) am vorderen Ende sich nach vorn erstreckende Auflagevorsprünge (14) aufweist, die sich in der Vorschubstellung in in der Anlagefläche vorgesehene Aussparungen (5) erstrecken.

4. Vorrichtung nach einem der Ansprüche 1 bis 3, **dadurch gekennzeichnet,** daß der Arbeitstisch (10) mit einer Bahnansaugeinrichtung (15) versehen ist, die zumindest unmittelbar vor Beginn und während der Bewegung des Arbeitstisches (10) von der Arbeitsstellung in die Vorschubstellung aktiviert ist und die während der Bewegung von der Vorschubstellung in die Arbeitsstellung unwirksam ist.

## Claims

1. An automatically controlled device for the section-wise treatment of a web (50) of planar material which is spread out on the supporting surface (11) of a work table (10) which is shorter than the web (50), comprising a slide (20) which can be moved in controlled manner back and forth across the supporting surface (11) of the work table (10) in the direction of the longitudinal extent of the web (50), on which slide there is located a head (21, 22) for receiving a tool, which head can be moved in controlled manner back and forth transversely to the longitudinal extent of the web (50), and also comprising a means for section-wise displacement of the planar material from a supply region forwards in the direction of the longitudinal extent of the web (50), characterised in that the work table (10) can be moved back and forth in the direction of the longitudinal extent of the web (50) between an operating position for treating the planar material and a feed position offset in the direction of displacement, the length of the supporting surface (11) of the work table (10) being greater than the length of the path of movement of the work table (10) between the operating position and the feed position, that the planar material at least during the movement of the work table (10) from the operating position into the feed position is connected exclusively with the work table (10), ruling out a relative movement between the planar material and work table, and that a web holding means (3, 30) is provided in the region of the frame (1) bearing the work table (10), which region is adjacent to the front edge of the work table (10) which is in the operating position, which means holds the planar material non-displaceably relative to the frame (1) during the movement of the work table (10) from the advance position into the operating position.

2. A device according to Claim 1, characterised in that the web-holding means (3, 30) has a clamping bar (30) which can be pressed against a contact surface of the frame (1).

3. A device according to Claim 2, characterised in that the work table (10) has at the front end ?supporting projections (14) which extend forwards, which projections in the feed position extend into recesses (5) provided in the contact surface.

4. A device according to one of Claims 1 to 3, characterised in that the work table (10) is provided with a web suction means (15) which is activated at least immediately before the start of and during the movement of the work table (10) from the operating position into the feed position and which is inactive during the movement from the feed position into the operating position.

## Revendications

1. Dispositif commandé automatiquement pour le traitement par sections d'une bande (50) en matériau plat, qui est déployée sur la surface d'appui (11) d'une table de travail (10) qui est plus courte que la bande (50), avec un chariot (20), commandé dans le sens de l'étendue longitudinale de la bande (50) par la surface d'appui (11) de la table de travail (10) et qui peut aller et venir, chariot sur lequel est disposée une tête (21, 22) commandée perpendiculairement à l'étendue longitudinale de la bande (50) et qui peut aller et venir, tête servant à recevoir un outil, ainsi qu'avec une installation pour déplacer section par section le matériau plat à partir d'une zône d'alimentation vers l'avant dans le sens de l'étendue longitudinale de la bande (50), dispositif caractérisé en ce que la table de travail (10) peut aller et venir dans le sens de l'étendue longitudinale de la bande (50) entre une position de travail pour traiter le matériau plat et une position d'avancement décalée dans le sens du déplacement, la longueur de la surface d'appui (11) de la table de travail (10) étant plus grande que la longueur du trajet de la table de travail (10) entre la position de travail et la position d'avancement , en ce que la matériau plat au moins pendant le mouvement de la table de travail (10) de la position de travail à la position d'avancement est relié à la table de travail (10) en excluant un mouvement relatif entre le matériau plat et la table de travail, et en ce que dans la zone du cadre (1) portant la table de travail (10) voisine de celui des bords antérieurs de la table de travail (10) qui se trouve dans la position d'avancement il est prévu une installation d'immobilisation de la bande (3, 30) qui maintient le matériau plat pendant le mouvement de la table de travail (10) de la position d'avancement à la position de travail sans qu il puisse se déplacer par rapport au cadre (1).

2. Dispositif selon la revendication 1, caractérisé en ce que l'installation (3, 30) d'immobilisation de la bande présente une barre de serrage (30) pouvant être pressée contre une surface d'installation du cadre (1).

3. Dispositif selon la revendication 2, caractérisé en ce que la table de travail (10) présente à l'extrémité avant des saillies d'appui (14) s'étendant vers l'avant, qui s'étendent, dans la position d'avancement, dans des évidements prévus dans la surface d'installation.

4. Dispositif selon l'une des revendications 1 à 3, caractérisé en ce que la table de travail (10) est pourvue d'une installation d'aspiration de la bande (15), activée au moins immédiatement avant le début et pendant le mouvement de la table de travail (10) de la position de travail à la position d'avancement et qui pendant le mouvement de la position d'avancement à la position de travail est inactive.
